# EUROPEAN PATENT SPECIFICATION

(11) **EP 1 342 017 B1**
(45) Date of publication and mention of the grant of the patent: **08.02.2006**
(21) Application number: 00985777.2
(22) Date of filing: 06.12.2000
(51) Int. Cl.: F16D 65/12

(54) **MOTORCYCLE LIGHTENING DISC FOR A DISC BRAKE AND RESPECTIVE MANUFACTURING METHOD**
GEWICHTSREDUZIERTE SCHEIBE FÜR EINE MOTORRADSCHEIBENBREMSE UND ENTSPRECHENDES HERSTELLUNGSVERFAHREN
ALLÉGEMENT DES DISQUES DE FREIN DE MOTOCYCLETTE ET PROCÉDÉ DE PRODUCTION CORRESPONDANT

(43) Date of publication of application: 10.09.2003
(73) Proprietor: Freni Brembo S.p.A., 24035 Curno (Bergamo) (IT)
(72) Inventor: TIRONI, Giovanni, Mario, I-24044 Dalmine (Bergamo) (IT); CORNOLTI, Raffaello, I-24010 Sorisole (Bergamo) (IT)
(74) Representative: Siniscalco, Fabio
(86) International application number: PCT/IT2000/000505
(87) International publication number: WO 2002/046639

(56) References cited:
- GB-A- 1 080 035
- US-A- 3 712 427
- US-A- 5 626 211
- US-A- 6 131 707

## Description

The present invention relates to a reduced-weight brake disc for motorcycles and to a method for the manufacture thereof.

It is known that a motorcycle brake disc is constituted by a circular ring-shaped braking band provided with tabs, spaced uniformly circumferentially on the inner side of the circular ring, for releasable fixing to a support bell or disc.

There are basically two reasons for constructing the disc with two separate components:
the pads which act on the braking band during braking cause considerable heating of the band and thermal expansion, for which there is no corresponding proportional expansion of the support bell or disc;
to prevent internal tensions and unacceptable warping of the braking band, there is therefore a need for a coupling between the braking band and the support disc which ensures some radial play and free thermal expansion of the braking band.

It is also known that braking efficiency is affected by the high temperature to which the braking band and the pads may be brought as a result of prolonged or frequent braking and successive braking operations.

It is therefore necessary to ensure good cooling of the braking band in order to dissipate the heat developed.

To achieve this effect, the solution most commonly adopted in motorcycle brake discs consists of the formation of a plurality of axial through-holes in the braking band, that is, holes with axes parallel to that of the disc.

The discontinuities thus created in the surface of the braking band have the effect of increasing the overall heat-exchange surface and breaking up to some extent the respective laminar air-flow which passes over the band, causing turbulence which ensures a more effective exchange of heat.

As a further advantage, the weight of the braking structure is reduced, which is of particular importance in racing motorcycles but is also of importance in normal motorcycles for reducing the resulting consumption and for reducing the braking power required, for a given speed and braking space, as a consequence of the reduced mass of the vehicle.

In order to enhance these two effects, that is, cooling efficiency and weight reduction, various measures have been proposed which, at production level, are particularly laborious, difficult to achieve and, in short, expensive, and which presuppose a certain thickness of the braking band such as there is in motor-vehicle brake discs.

For example, in the document JP2209632 published on 21/8/1990, it is proposed to produce a braking band in which a plurality of holes are formed by drilling along the central section of the thickness of the band, necessarily with circular cross-sections, and extending throughout the band in an approximately radial direction, putting the inner wall of the band (more correctly an annular channel formed in the band) into communication with the peripheral or outer wall. In other words, the axial drillings are replaced by a plurality of radial drillings in which an air-flow is induced by centrifugal effect when the vehicle is in motion.

However, it is clear that, even though this solution is effective for motor-vehicle brake discs, in motorcycles, this effect is greatly limited by the small diameter of the perforations which can be made, which is necessarily less than the thickness of the braking band.

In the document JP58037330 published on 4/3/1983, on the other hand, it is proposed to put a plurality of axial holes formed in the braking ring into communication with ducts formed in the central portion of the thickness of the braking band and opening in the peripheral wall thereof.

The ducts are U-shaped with a depth greater than their width and, in practice can be produced, with considerable complications, only by the casting of the disc in sand with suitable cores (which excludes the more economic production of the disc by blanking) and is in any case difficult if not impossible to achieve in motorcycle brake discs the thickness of which (5-7 mm) is less than those for motor vehicles.

Otherwise, a very laborious milling operation with an end mill having an axis of rotation in the plane of the disc, a small diameter and a proportionally long length would be necessary.

Whatever method is used, the resulting product is inevitably expensive and far from being usable economically in motorcycles even of good quality and/or large piston displacement or power.

The present invention solves this problem and, by particularly simple and inexpensive production methods without the introduction of any limitations to the production techniques currently used, permits the production of a reduced-weight motorcycle disc brake which, as well as having reduced weight, also has considerably improved cooling efficiency.

These results are achieved by a brake disc comprising a braking band in the form of a circular ring which is provided with tabs, spaced uniformly circumferentially on the inner side of the circular ring, for releasable fixing to a support bell or disc, and with a plurality of axial holes. The braking band also has, in the central portion of its thickness, a plurality of millings which are produced by a disc-type milling cutter with an axis parallel to the axis of the circular ring, and which are spaced uniformly circumferentially and are formed alternately in the inner wall and in the outer wall or periphery of the braking band, the millings formed in the peripheral wall being aligned radially with the fixing tabs, and the millings formed in the inner wall being interposed between the fixing tabs so that at least some of the plurality of axial holes are in communication with the millings.

The braking band, possibly with its holes, can be produced by the blanking of sheet metal (for example, stainless steel) or by the forming of cast iron in a mould.

Alternatively, the holes may be formed by drilling.

These simple, conventional steps are followed by the milling step which is particularly simple and quick because it is performed by disc-type milling cutters.

The characteristics and the advantages of the invention will become clearer from the following description of a preferred embodiment and of the respective manufacturing method, given with reference to the appended drawings, in which:
Figure 1 is a front view (on the left-hand side) and a median section limited purely to the braking band (on the right-hand side) of a motorcycle brake disc formed in accordance with the present invention. The section plane is identified by the line A-A of Figure 2.
Figure 2 is a diametral section of the brake disc of Figure 1, taken on the line B-B of Figure 1.

With reference to the drawings, the brake disc according to the present invention comprises a braking band 1 in the form of a circular ring provided, on its inner side, with a plurality of releasable-fixing tabs 2, 3, ..10.

The fixing tabs are connected, in a known manner which falls outside the scope of the invention, by pins or bushes, not shown, to a support bell or disc 11 which in turn is anchored to the wheel hub.

A plurality of axial holes such as 12, 13, (that is, holes with axes parallel to the axis of the disc) are formed in the braking band, distributed uniformly around the band and spaced periodically at different distances from the axis of the disc.

In general, the distribution of the holes, which are preferably of circular or elongate slot-like cross section, is selected to ensure both uniform wear of the braking pads and a constant area of contact between the pads and the braking band for any angular position which the brake disc adopts relative to the pads.

From these points of view, the disc described does not differ from those known in the art.

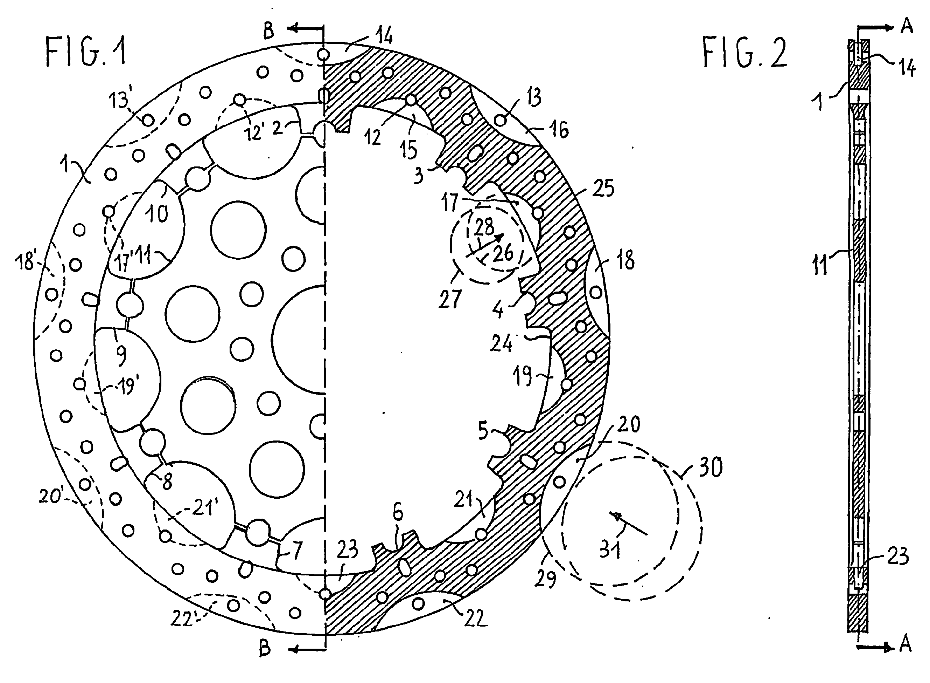

The inventive aspect, on the other hand, is clearly visible in the sectioned half view of Figure 1 and in the section of Figure 2; in a central position, in the thickness of the braking band, there are millings 14, 15, ...23, 15', 16', ...22' spaced uniformly circumferentially and formed alternately in the peripheral wall 25 and in the inner wall 24 of the band 1.

The millings 14, 16, 16' 18, 18' 20, 20', 22, 22' formed in the peripheral wall 25 are aligned radially with the fixing tabs 2, 3, ...10.

The millings 15, 15', 17, 17', 19, 19', 21, 21', 23 formed in the inner wall 24 are interposed between the fixing tabs 2, 3,... 10.

The millings, which are in the form of circular segments (possibly elongated), can easily be produced with a disc-type milling cutter having an axis parallel to that of the circular ring constituted by the braking band, by a method which is quick, repetitive and particularly reliable and safe since it does not stress the tool in an anomalous and dangerous manner.

For example, the two broken lines 26, 27 represent the space occupied by a milling cutter used to form the milling 17 in the two, initial and final positions of the activity of the milling cutter which rotates in the plane of the drawing with an active stroke oriented towards the periphery of the piece to be machined, as indicated by the arrow 28.

Upon the completion of the milling of a cavity, the tool can be withdrawn from the piece, which is advantageously mounted on a rotatable turret, in order to start the milling of a new recess.

Similarly, the two broken lines 29, 30 represent the space occupied by the tool used to form the milling 20 in the two, initial and final positions of the activity of the milling cutter.

Its active stroke, which is oriented towards the interior of the band 1, is indicated by the arrow 31.

It should be noted that, during the machining both of the peripheral wall and of the inner wall, the direction of the stroke, which is not necessarily radial, can be selected within wide angular limits in order to optimize the efficiency of the tool in relation to its direction of rotation. For machining operations on the inner side of the braking band, the use of a tool of suitable dimensions may be provided for. In this case, the surface machined by the tool, which delimits the inner and/or outer milling, may have a cylindrical shape with a non-circular cross-section.

With regard to the depth of the millings, there is inevitably a limit, by way of indication, 1/3 of the width of the braking band, in order not to prejudice the necessary rigidity of the band, but considerable advantages are nevertheless achieved:
- the weight of the disc is further reduced as a result of the combined presence of the axial holes and of the millings in the braking band, the millings being formed both in the inner wall and in the peripheral wall of the band;
- heat dissipation efficiency is also increased for a plurality of reasons:

first of all, the millings bring about a considerable increase in the surface area for exchanging heat with the surrounding air;
moreover, when the motorcycle is in motion, the surfaces of the millings are struck directly by the air (this applies particularly to the disc or discs of the front wheel which, in a motorcycle, are fitted on the sides of the wheel);
in the third place, a predetermined number of axial holes, if not all of them, are put into communication with the milled cavities and behave as flow ducts for an air-flow induced by centrifugal effect therein.

For example, with reference to the cross-section of Figure 2, the volume of air which is contained in the internal millings such as 23, and which is rotated together with the braking band, is urged towards the periphery and tends to emerge from the axial holes such as 12 which are in communication with the millings.

Similarly, the volume of air which is contained in the peripheral millings such as 14, and which is rotated, tends to emerge therefrom, creating a reduced pressure which draws an air-flow through the axial holes such as 13, in communication therewith.

Naturally, this effect is enhanced or attenuated periodically according to the angular position of the milling relative to the direction of travel, by the concomitant effect of pressure exerted by the air-flow which strikes the band when the motorcycle is in motion.

In addition to and superimposed on these effects is the turbulence caused by the numerous angular discontinuities of the inner and peripheral surfaces which, with abrupt variations in pressure, also exerts its influence on the braking surfaces and, in short, significantly increases the heat-exchange coefficient.

All of these advantages are achieved by a braking band of a brake disc which, from the point of view of its external dimensions and structure (the inside and outside diameters of the band, the thickness, number and dimensions of the fixing tabs) can be completely identical to those of conventional motorcycle disc brakes so as to ensure complete interchangeability, without the need to modify other parts either of the brake or of the motorcycle.

In order to satisfy contingent and specific requirements, an expert in the art may apply to the above-described preferred embodiment of the reduced-weight brake disc many modifications, adaptations and replacements of elements with other functionally equivalent elements without, however, departing from the scope of the appended claims.

## Claims

1. A motorcycle brake disc of the type comprising a braking band (1) in the form of a circular ring which is provided with tabs (2, 3...10), spaced uniformly circumferentially on the inner side of the circular ring, for releasable fixing to a support bell (11), the band (1) having a plurality of through-holes (12, 13) with axes parallel to the axis of the ring, said
band (1) having in the central portion of its thickness, millings (14, 15, 15', ..., 22', 23) which are produced by a disc-type milling cutter with an axis parallel to the axis of the circular ring, which are spaced uniformly circumferentially, and are formed alternately in the inner wall (24) and in the peripheral wall (25) of the band, the millings (14, 16, 16', ... 22') formed in the peripheral wall being aligned radially with the fixing tabs, the millings (15, 15', 17, ... 23) formed in the inner wall being interposed between the fixing tabs, and at least some of the plurality of holes (12, 13) being in communication with the millings.

2. A brake disc according to Claim 1 in which the millings have the shape of circular segments.

3. A method of manufacturing a reduced-weight brake disc for motorcycles, wherein
the formation, by known techniques, of a braking band (1) in the form of a circular ring is provided with tabs (2, 3..10), spaced uniformly circumferentially on the inner side of the circular ring, for releasable fixing to a support bell (11), and with a plurality of cooling and weight-reducing holes (12, 13) with axes parallel to the axis of the circular ring, is followed by the milling, in the thickness of the braking band (1), by means of a disc-type milling cutter with an axis parallel to the axis of the circular ring, of a plurality of cavities (14, 15, 15', ...22', 23) spaced uniformly circumferentially and formed alternately in the inner wall (24) and in the peripheral wall (25) of the band, the cavities (14, 16, 16', ... 22') formed in the peripheral wall being aligned radially with the fixing tabs, the cavities (15, 15', 17, ... 23) formed in the inner wall being interposed between the fixing tabs, and at least some of the plurality of holes (12, 13) being put into communication with the recesses.

## Patentansprüche

1. Motorradbremsscheibe des Typs umfassend ein Bremsband (1) in der Form eines Kreisrings, welches mit Laschen (2, 3 ... 10) ausgestattet ist, die gleichmäßig über den Umfang an der Innenseite des Kreisrings aufgeteilt sind, zum lösbaren Befestigen an einer Trageglocke (11), wobei das Bremsband (1) eine Mehrzahl von Durchgangslöchern (12, 13) aufweist, deren Achsen parallel zu der Achse des Rings sind,
wobei das Bremsband (1) im Zentralabschnitt seiner Dicke Fräsungen (14, 15, 15', ..., 22', 23) aufweist, welche durch einen Scheibenfräser mit einer Achse parallel zur Achse des Kreisrings hergestellt werden, welche gleichmäßig über den Umfang verteilt sind und abwechselnd in der inneren Wand (24) und in der Umfangswand (25) des Bremsbandes ausgebildet sind, wobei die Fräsungen (14, 16, 16', ..., 22'), welche in der Umfangswand ausgebildet sind, radial mit den Befestigungslaschen fluchten, die Fräsungen (15, 15', 17, ..., 23), welche in der Innenwand ausgebildet sind, zwischen den Befestigungslaschen angeordnet sind und wenigstens einige der Mehrzahl der Löcher (12, 13) in Verbindung mit den Fräsungen stehen.

2. Bremsscheibe gemäß Anspruch 1, in welcher die Fräsungen die Form von Kreissegmenten aufweisen.

3. Verfahren zur Herstellung einer gewichtsverringerten Bremsscheibe für Motorräder, wobei
die Ausbildung durch bekannte Techniken eines Bremsbandes (1), welches in der Form eines Kreisrings mit Laschen (2, 3 ... 10), die gleichmäßig über den Umfang auf der Innenseite des Kreisrings aufgeteilt sind, zum lösbaren Befestigen an einer Trageglocke (11) und mit einer Mehrzahl von kühlenden und gewichtsverringernden Löchern (12, 13) mit Achsen parallel zu der Achse des Kreisrings ausgestattet ist, gefolgt wird durch das Fräsen in die Dicke des Bremsbandes (1) mittels eines Scheibenfräsers mit einer Achse parallel zur Achse des Kreisrings einer Mehrzahl von Ausnehmungen (14, 15, 15', ..., 22', 23), welche gleichmäßig über den Umfang verteilt und abwechselnd in der inneren Wand (24) und in der Umfangswand (25) des Bremsbandes ausgebildet sind, wobei die Ausnehmungen (14, 16, 16', ... , 22'), welche in der Umfangswand ausgebildet sind, radial mit den Befestigungslaschen fluchten, die Ausnehmungen (15, 15', 17, ..., 23), welche in der Innenwand ausgebildet sind, zwischen den Befestigungslaschen angeordnet sind und wenigstens einige der Mehrzahl der Löcher (12, 13) in Verbindung mit den Vertiefungen gebracht werden.

## Revendications

1. Disque de frein de motocyclette du type comprenant une bande de freinage (1) sous la forme d'un anneau circulaire muni de pattes (2, 3, ..., 10) uniformément réparties circonférentiellement sur le côté intérieur de l'anneau circulaire, destinées à le fixer de manière amovible à une courroie de support (11), la bande (1) possédant une pluralité de trous traversants (12, 13) dont les axes sont parallèles à l'axe de l'anneau, ladite bande (1) ayant dans la partie centrale de son épaisseur des fraisages (14, 15, 15', ...., 22', 23) qui sont produits par une fraise à disque dont un axe est parallèle à l'axe de l'anneau circulaire, qui sont uniformément répartis circonférentiellement et alternativement formés dans la paroi intérieure (24) et dans la paroi périphérique (25) de la bande, les fraisages (14, 16, 16', .., 22') formés dans la paroi périphérique étant radialement alignés avec les pattes de fixation, les fraisages (15, 15', 17, ...., 23) formés dans la paroi intérieure étant interposés entre les pattes de fixation, et au moins une partie de la pluralité des trous (12, 13) étant en communication avec les fraisages.

2. Disque de frein selon la revendication 1, dans lequel les fraisages ont la forme de segments circulaires.

3. Procédé de fabrication d'un disque de frein de poids réduit pour motocyclettes, dans lequel
la formation par des techniques connues d'une bande de freinage (1) sous la forme d'un anneau circulaire muni de pattes (2, 3, ..., 10) uniformément réparties circonférentiellement sur le côté intérieur de l'anneau circulaire, destinées à le fixer de manière amovible à une courroie de support (11) et possédant une pluralité de trous de refroidissement et de réduction de poids (12, 13) dont les axes sont parallèles à l'axe de l'anneau circulaire, est suivie par le fraisage, dans l'épaisseur de la bande de freinage (1) au moyen d'une fraise à disque dont un axe est parallèle à l'axe de l'anneau circulaire, d'une pluralité de cavités (14, 15, 15', ..., 22', 23) qui sont uniformément réparties circonférentiellement et alternativement formées dans la paroi intérieure (24) et dans la paroi périphérique (25) de la bande, les cavités (14, 16, 16', ..., 22') formées dans la paroi périphérique étant radialement alignées avec les pattes de fixation, les cavités (15, 15', 17, ..., 23) formées dans la paroi intérieure étant interposées entre les pattes de fixation, et au moins une partie de la pluralité des trous (12, 13) étant en communication avec les cavités.
